# DEMANDE DE BREVET EUROPEEN

(11) **EP 3 653 358 A1**
(43) Date de publication de la demande: **20.05.2020**
(21) Numéro de dépôt: 19209163.5
(22) Date de dépôt: 14.11.2019
(51) Int. Cl.: B29C 45/14

(54) **PIÈCE PLASTIQUE LISSE AVEC FILM SEMI-TRANSPARENT EN SURFACE**

(30) Priorité: 14.11.2018 FR 1871522
(71) Demandeur: Compagnie Plastic Omnium, 69007 Lyon (FR)
(72) Inventeur: STABLO, Frédéric, 01150 Sainte-Julie (FR); MOULIN, Gilles, 01150 Sainte-Julie (FR)
(74) Mandataire: LLR

(57) **Abrégé**

L'invention concerne un procédé de fabrication d'une pièce de carrosserie (10) de véhicule automobile, comportant un corps principal (20) muni d'un film décoratif (30), le film décoratif (30) comportant une face (40) munie de zones translucides (60) et de zones opaques (70), caractérisé en ce que le procédé comporte les étapes suivantes :
- dépôt du film décoratif (30) sur une paroi (100) d'une chambre de moulage (90) d'un moule (80), les zones opaques (70) étant en relief par rapport aux zones translucides (60), et les zones opaques (70) étant en contact avec la paroi (100) du moule (80), ménageant un espace (110) entre les zones translucides (60) et la paroi (100) ;
- fermeture du moule (80) ;
- injection d'une matière plastique dans la chambre de moulage (90) afin de surmouler le corps principal (20) sur le film décoratif (30), la pression d'injection permettant de pousser les zones translucides (60) contre la paroi (100).

## Description

L'invention a pour objet une pièce de carrosserie d'un véhicule automobile et plus particulièrement une pièce comportant un élément de style destinée à contribuer à l'aspect général extérieur du véhicule. L'invention concerne également un procédé de fabrication d'une telle pièce.

Ces éléments de style ou ces éléments de carrosserie ont pour objet de rehausser une ligne ou de souligner une forme dans le but de renforcer l'image que le constructeur souhaite associer à sa marque ou à son modèle de véhicule.

A titre d'exemple, les baguettes chromées courant le long de la partie latérale du véhicule, les protections de bas de caisse, l'emblème de la marque, les enjoliveurs de poignées de porte, les coques de rétroviseurs sont ces pièces de style dont le design fait l'objet d'un soin particulier de la part des concepteurs du véhicule. Par extension, toutes les pièces de la carrosserie visibles de l'extérieur et participant à l'aspect général du véhicule, telles qu'un ouvrant, un parechoc, une calandre, peuvent être considérées également comme des éléments de carrosserie ou des pièces de style entrant dans le champ d'application de l'invention.

Dans le but de renforcer l'effet produit par ces éléments de carrosserie, il a été proposé de placer une source lumineuse en arrière de la surface de l'élément de carrosserie formé d'un matériau transparent ou translucide, et de modifier la transparence du revêtement recouvrant l'élément de carrosserie de manière à faire apparaître un effet lumineux lorsque les conditions d'éclairage extérieur sont insuffisantes et que la source de lumière est activée.

On rappelle que la transmittance d'un matériau est la fraction du flux lumineux le traversant. Ainsi la transmittance représente le rapport de l'intensité lumineuse transmise par le matériau sur l'intensité lumineuse incidente.

Un élément est qualifié de transparent lorsqu'il se laisse traverser par la lumière dans le domaine du visible en permettant de distinguer nettement les objets se trouvant derrière. On considère qu'un élément ayant une transmittance de 70% environ est transparent. Un élément est qualifié de translucide lorsqu'il se laisse traverser par la lumière dans le domaine du visible, mais sans permettre de distinguer nettement les objets se trouvant derrière et a une transmittance d'au moins 50%.

Ainsi, lorsque le véhicule est éclairé par la lumière du jour, le dispositif optique est éteint, et l'apparence de l'élément de carrosserie est donnée par le revêtement de peinture formant la couche externe de l'élément de carrosserie. A l'inverse, lorsque les conditions d'éclairage diminuent, ou parfois même en plein jour, comme cela est de plus en plus demandé par les designers des constructeurs automobiles, le dispositif optique est allumé et l'élément de carrosserie apparaît sous la forme d'une surface uniformément lumineuse.

En activant le dispositif d'éclairage, il est également possible de faire apparaître des motifs particuliers tels qu'un logo à la marque du constructeur, ou encore des éléments figuratifs particuliers qui restent invisibles lorsque le véhicule est éclairé par la lumière du jour.

Un tel dispositif d'éclairage est proposé dans le document FR 3 046 387, qui décrit un élément de carrosserie de véhicule automobile comprenant un corps formé d'une matière transparente, disposé de façon visible sur un support formant partie de la carrosserie du véhicule, dont une face est recouverte d'un film décoratif semi transparent. Un guide de lumière diffusant raccordé à une source de lumière est disposé entre le support et le corps de l'élément de carrosserie.

Néanmoins, ces solutions nécessitent l'assemblage de plusieurs éléments, ce qui augmente le temps et le coût de fabrication.

De plus, l'utilisation de films décoratifs n'est pas totalement satisfaisant pour les constructeurs. Ces films sont fabriqués en réalisant dans un premier temps une couche plane qui forme une première couche. Puis, on ajoute des couches de couleur là où cela est nécessaire. Les zones opaques sont donc formées par des surépaisseurs importantes. Ainsi, la couleur souhaitée, par exemple une couleur ton caisse difficile à obtenir, se retrouve finalement sur la face du film portant les changements d'épaisseur. Il n'est alors pas possible de mettre la face plane du film décoratif vers l'extérieur, donc au fond d'un moule, car la teinte ne serait pas la teinte souhaitée.

De ce fait, ces films décoratifs présentent des surépaisseurs détectables à la main au niveau du passage d'une zone à une autre. Ainsi, lorsque ces films sont adhésivés, ce qui est la façon classique de les fixer sur une surface, alors cette surépaisseur est détectable au toucher. Ceci n'est pas acceptable pour les constructeurs automobiles, d'autant plus que l'adhésivage vieillit dans le temps.

L'invention a notamment pour but de s'affranchir de ces problèmes en fournissant un procédé de fabrication simple d'une pièce de carrosserie munie d'un film décoratif, dont la surépaisseur entre les zones opaques et translucides a été supprimée lors du procédé de fabrication de la pièce.

A cet effet l'invention a pour objet un procédé de fabrication d'une pièce de carrosserie de véhicule automobile, comportant un corps principal muni d'un film décoratif, le film décoratif comportant une face munie de zones translucides et de zones opaques. Le procédé comporte les étapes suivantes :
- dépôt du film décoratif sur une paroi d'une chambre de moulage d'un moule, les zones opaques étant en relief par rapport aux zones translucides, et les zones opaques étant en contact avec la paroi du moule, ménageant un espace entre les zones translucides et la paroi ;
- fermeture du moule ;
- injection d'une matière plastique dans la chambre de moulage afin de surmouler le corps principal sur le film décoratif, la pression d'injection permettant de pousser les zones translucides contre la paroi.

Ainsi la pièce de carrosserie est injectée avec un seul matériau, évitant ainsi l'utilisation de matériaux non adaptés aux exigences définies dans les cahiers des charges des constructeurs automobiles. On évite également des étapes complexes consistant à rapporter un insert transparent au sein de la pièce de carrosserie, par des opérations de fixations, d'adhésivage, de co-moulage ou de bi-injection.

De plus la surface extérieure de la pièce de carrosserie est parfaitement lisse.

Le processus de fabrication est donc simplifié, et les exigences des constructeurs respectées.

Le procédé peut en outre comporter l'une ou plusieurs des caractéristiques suivantes, prises seules ou en combinaison :
- on utilise un film décoratif comprenant un film translucide sur lequel reposent des éléments opaques ;
- on utilise un film décoratif comprenant une couche de couleur, par exemple sur la face opposée à la face munie des zones translucides et des zones opaques ;
- la pression d'injection est apte à rendre lisse la surface de la pièce de carrosserie en contact avec la paroi du moule ;
- on évacue l'air de l'espace entre les zones translucides et la paroi lors de l'injection, au moyen d'au moins un évent positionné dans la paroi du moule ;
- on utilise un film décoratif dont l'épaisseur est comprise entre 5 et 20 micromètres ;
- on utilise un film décoratif thermoformé ;
- la face munie de zones translucides et de zones opaques est destinée à être visible depuis l'extérieur du véhicule ;
- on recouvre toute la paroi du moule avec le film décoratif, afin que le film décoratif recouvre la totalité de la surface extérieure de la pièce de carrosserie ;
- l'injection est réalisée à haute température et haute pression ;
- on injecte la matière plastique choisie parmi au moins l'une des matières suivantes : polypropylène translucide, polyuréthane thermoplastique, polyméthacrylate de méthyle, polyamide, polycarbonate, polyuréthane, cyclo-oléfines copolymères et cyclo-oléfines-polymères :
- on utilise un film décoratif réalisé en utilisant au moins l'une des matières suivantes : de l'Acrylonitrile Butadiène Styrène translucide, du polypropylène, du Polycarbonate, du polyamide, du Polyméthacrylate de Méthyle, du polyuréthane, et du polyéthylène téréphtalate ;
- on injecte du polycarbonate à 450 bars et à 250°C, et on utilise un film décoratif réalisé en polycarbonate ;
- on injecte du polyuréthane thermoplastique à 60 bars et à 90°C, et on utilise un film décoratif réalisé en polypropylène ;
- on positionne au moins une source lumineuse sur la face opposée à la face munie des zones translucides et des zones opaques.
- la source lumineuse est une source ayant une longueur d'onde modulée.

L'invention a également pour objet une pièce de carrosserie, de véhicule automobile, comportant un corps principal muni d'un film décoratif, le film décoratif comportant une face munie de zones translucides et de zones opaques, dans laquelle le corps principal est surmoulé sur le film décoratif au moyen d'une matière plastique, et en ce qu'au niveau de la face, les zones translucides affleurent avec les zones opaques.

La pièce de carrosserie peut en outre comporter l'une ou plusieurs des caractéristiques suivantes, prises seules ou en combinaison :
- le film décoratif comprend un film translucide sur lequel reposent des éléments opaques ;
- le corps principal comprend, en regard des zones translucides, une partie en saillie par rapport aux parties du corps principal qui sont en regard des zones opaques,
- le film décoratif comprend une couche de couleur ;
- le film décoratif a une épaisseur comprise entre 5 et 20 micromètres ;
- le film décoratif est thermoformé ;
- la face munie de zones translucides et de zones opaques est destinée à être visible depuis l'extérieur d'un véhicule ;
- le film décoratif recouvre la totalité de la surface extérieure de la pièce de carrosserie ;
- le corps principal est réalisé en une matière plastique choisie parmi au moins l'une des matières suivantes : polypropylène translucide, polyuréthane thermoplastique, polyméthacrylate de méthyle, polyamide, polycarbonate, polyuréthane, cyclo-oléfines copolymères et cyclo-oléfines-polymères ;
- le film décoratif est réalisé en utilisant au moins l'une des matières suivantes : de l'Acrylonitrile Butadiène Styrène translucide, du polypropylène, du Polycarbonate, du polyamide, du Polyméthacrylate de Méthyle, du polyuréthane, et du polyéthylène téréphtalate ;
- la pièce de carrosserie selon l'invention, comporte au moins une source lumineuse sur la face opposée à la face munie des zones translucides et des zones opaques ;
- la source lumineuse est une source ayant une longueur d'onde modulée.

### Brève description des figures

L'invention sera mieux comprise à la lecture de la description qui va suivre donnée uniquement à titre d'exemple et faite en se référant aux dessins annexés dans lesquels :
[Fig. 1] est une vue d'une pièce de carrosserie, un pare-chocs, de véhicule automobile,
comportant un film décoratif sur l'extérieur de la pièce, visible depuis l'extérieur du véhicule ;
[Fig. 2] est un schéma montrant en coupe un moule d'injection, lors de l'étape de dépose d'un film décoratif sur une paroi du moule ;
[Fig. 3] est un schéma montrant en coupe un moule d'injection, lors de l'étape d'injection de la matière plastique pour surmouler le film décoratif ;
[Fig. 4] est une vue illustrant la pièce de carrosserie éclairée, par derrière, par un dispositif lumineux.

### Description détaillée

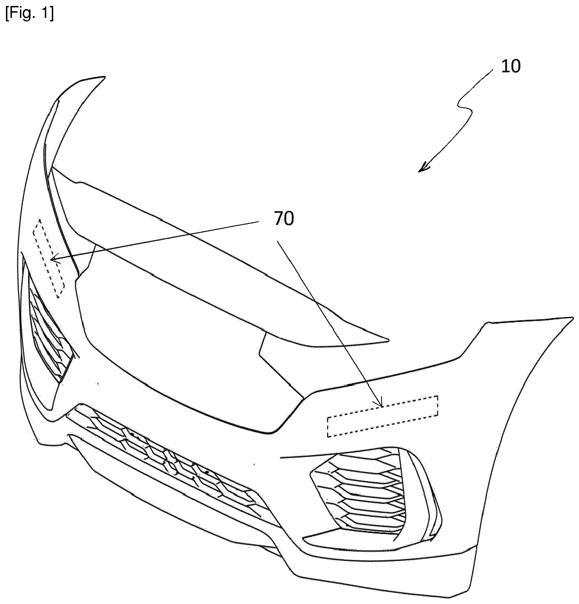

On se réfère à la figure 1 qui illustre un exemple d'un mode de réalisation d'une pièce de carrosserie 10 de véhicule automobile.

La pièce de carrosserie 10 comporte un corps principal 20 muni d'un film décoratif 30 qui comporte une face 40 munie de zones translucides 60 et de zones opaques 70. La face 40 correspond à la face extérieure de la pièce de carrosserie, c'est-à-dire à la face visible depuis l'extérieure du véhicule sur laquelle est montée la pièce.

Le procédé de fabrication d'une telle pièce de carrosserie 10 est un procédé de surmoulage par injection du film décoratif 30.

Ce procédé comporte les étapes suivantes :
- dépôt du film décoratif 30 sur une paroi 100 d'une chambre de moulage 90 d'un moule 80, les zones opaques 70 étant en relief par rapport aux zones translucides 60, et les zones opaques 70 étant en contact avec la paroi 100 du moule 80, ménageant un espace 110 entre les zones translucides 60 et la paroi 100 ;
- fermeture du moule 80 ;
- injection d'une matière plastique dans la chambre de moulage 90 afin de surmouler le corps principal 20 sur le film décoratif 30, la pression d'injection permettant de pousser les zones translucides 60 contre la paroi 100.

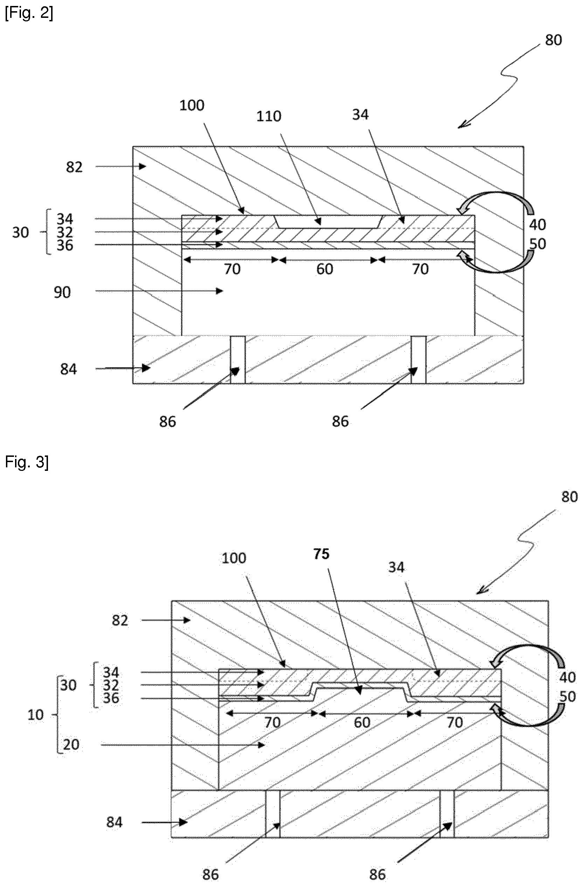

Comme illustrés sur les figures 2 et 3, on utilise un moule d'injection 80 comportant classiquement :
- deux parties : une matrice 82 et un poinçon 84 ;
- ces deux parties formant une chambre de moulage 90 lorsque le moule est fermé ;
- des orifices d'injection 86, portés par le poinçon 84 sur l'exemple illustré ;
- optionnellement, des évents 88 (non représentés), portés par la matrice 82, afin de permettre à de l'air piégé dans la chambre de moulage de s'échapper, et éviter ainsi l'apparition de bulle dans la pièce moulée.

La face 40 munie de zones translucides 60 et de zones opaques 70 est destinée à être visible depuis l'extérieur du véhicule.

De façon préférentielle, on recouvre toute la paroi 100 du moule 80 avec le film décoratif 30, afin que le film décoratif 30 recouvre la totalité de la surface extérieure de la pièce de carrosserie. Il est ainsi plus simple de positionner correctement le film décoratif 30, et de le maintenir en place pendant le procédé d'injection. Par exemple, on peut utiliser, pour le maintenir, des zones techniques de la pièce 10, c'est-à-dire des zones qui ne sont pas visibles en extérieur de véhicule après assemblage du véhicule.

De plus, lorsque le film recouvre la totalité de la surface de la pièce de carrosserie 10, la couleur de la pièce 10 est uniforme. La couleur est liée à fabrication du film 30, et non au procédé d'injection de la pièce 10, ni à un post-traitement comme un passage en chaîne peinture par exemple.

La figure 2 illustre l'étape de dépose du film décoratif 30 sur la paroi 100 du moule 80.

Selon cet exemple de réalisation, le film décoratif 30 comprend un film translucide 32 (ayant par exemple une épaisseur comprise entre 5 et 20 micromètres), sur lequel reposent, au niveau des zones opaques 70, au moins un élément opaque 34. L'alternance des zones translucides et opaques permet la création d'un motif de décoration, accentué ou rendu visible par une source lumineuse 120 placée derrière la pièce de carrosserie 10 lorsqu'elle est montée sur le véhicule.

Ainsi, lorsque le film décoratif 30 est déposé sur la paroi 100, ce sont les zones en relief, les zones opaques 70, qui sont en contact avec la paroi 100. Les zones translucides 60 sont, elles, mises à distance de la paroi 100 par les éléments opaques, comme l'illustre la figure 2.

Selon un mode de réalisation, le film décoratif 30 comprend également une couche de couleur 36, par exemple sur la face intérieure 50, c'est-à-dire la face opposée à la face externe 40.

Cette couche de couleur sert de filtre chromatique lorsque la pièce de carrosserie 10 est rétroéclairée (par derrière) : sans éclairage, la pièce de carrosserie à un ton caisse uniforme ; lorsque la pièce est rétroéclairée, la lumière passe à travers la ou les différentes couches de couleur translucides, et ces couches font office de filtre afin que la lumière en sortie soit de la couleur souhaitée, notamment une couleur qui tranche avec le ton caisse.

Le film décoratif 30 peut également être fabriqué directement avec un revêtement de protection (non représenté) qui réponde au cahier des charges des surfaces extérieures des pièces de carrosserie. Un tel revêtement de protection permet, par exemple, d'améliore la tenue aux UV, au gravillonnage, aux appareils de type nettoyeur à haute pression.... Il n'y a ainsi pas d'effet de « bord de film », c'est-à-dire une zone en bordure de pièce qui resterait sensible, notamment lors du vieillissement de la pièce.

De façon générale, il est possible de produire, et donc d'utiliser des films 30 avec toutes sortes de motifs et de couleurs.

La figure 3 illustre l'étape d'injection de la matière plastique, l'injection est réalisée à haute température et haute pression.

Comme illustré sur cette figure 3, la pression d'injection permet de pousser les zones translucides 60 contre la paroi 100, ainsi il n'y a plus d'espace 110 entre les zones translucides 60 et la paroi 100 lors de l'injection. De façon préférentielle, la pression d'injection est apte à rendre lisse la surface 40 de la pièce de carrosserie en contact avec la paroi 100 du moule.

Du fait que les zones translucides 60 sont poussées contre la paroi 100 par l'injection de la matière plastique du corps principal 20, le corps principal 20 comprend, en regard des zones translucides 60, une partie en saillie 75 par rapport aux parties du corps principal qui sont en regard des zones opaques.

En effet, après injection (voir figure 3), l'espace 110 est comblé par le film plastique 30, tandis que l'espace occupé avant injection par les zones translucides 60 du film (voir figure 2) est occupé par la partie en saillie 75 du corps principal.

Ainsi, au niveau de la partie en saillie 75 le corps principal 20 présente une plus grande épaisseur. Par ailleurs, l'épaisseur du film décoratif 30 est réduite au niveau des zones translucides 60, l'épaisseur du film décoratif étant plus importante au niveau des zones opaques. Ceci permet de faire en sorte que la face 40 reste sensiblement plane et lisse, sans présenter de surépaisseur.

Lors de cette étape, de l'air peut être emprisonné dans les espaces 110. Pour éviter que des bulles d'air ne soient présentes dans la pièce 10 après le moulage, on évacue l'air de l'espace 110 entre les zones translucides 60 et la paroi 100 lors de l'injection, au moyen d'au moins un évent 88 positionné dans la paroi 100 du moule.

Il est également avantageux d'utiliser des évents pour maintenir en place le film décoratif 30, par aspiration.

On injecte la matière plastique choisie parmi au moins l'une des matières suivantes : polypropylène translucide, polyuréthane thermoplastique (TPU), polyméthacrylate de méthyle, polyamide, polycarbonate, polyuréthane, cyclo-oléfines copolymères et cyclo-oléfines-polymères.

Selon un mode préféré de réalisation, on injecte du polypropylène translucide, sans ajout de noir de carbone comme cela est nécessaire habituellement. La pièce ainsi moulée a une teinte laiteuse et claire, et est translucide. Mais de façon étonnante, la luminosité est comparable à celle obtenue à travers un insert transparent.

L'utilisation de ce matériau permet de diffuser la lumière, sans que le point chaud, correspondant à la source de lumière pour le rétroéclairage, ne soit visible.

Le film décoratif 30 est de façon avantageuse un film thermoformé. On utilise un film décoratif 30 réalisé en utilisant au moins l'une des matières suivantes : de l'Acrylonitrile Butadiène Styrène translucide (ABS), du polypropylène (PP), du Polycarbonate (PC), du polyamide (PA), du Polyméthacrylate de Méthyle (PMMA), du polyuréthane (PU), et du polyéthylène téréphtalate (PET).

La pièce de carrosserie 10 ainsi fabriquée est munie d'un dispositif lumineux, placé derrière la pièce 10, non visible lorsque la pièce est montée sur le véhicule. Ce dispositif comporte un ensemble de sources lumineuses, qui émettent de la lumière vers l'extérieur du véhicule, en traversant les zones translucides 60.

Ainsi, le procédé comporte une étape de positionnement d'au moins une source lumineuse sur la face opposée 50 à la face extérieure 40.

Selon un mode de réalisation, la source est une source ayant une longueur d'onde modulée, afin d'obtenir un fort contraste entre la zone illuminée 60 et la zone non-illuminée 40, lorsque le dispositif lumineux émet de la lumière.

Le dispositif lumineux peut également être positionné derrière la pièce 10 mais directement sur le véhicule. Le dispositif lumineux émet de la lumière sur la face 50 de la pièce, cette lumière travers la pièce 10 au niveau des zones translucides 60.

### Exemples de réalisation

Selon un premier exemple de réalisation, on injecte du polycarbonate à 450 bars et à 250°C, et on utilise un film décoratif 30 réalisé en polycarbonate.

Selon un second exemple de réalisation, on injecte du polyuréthane thermoplastique (TPU) à 60 bars et à 90°C, et on utilise un film décoratif 30 réalisé en polypropylène.

L'invention concerne également une pièce de carrosserie, issue du procédé selon l'invention.

Cette pièce de carrosserie 10 de véhicule automobile, comporte un corps principal 20 muni d'un film décoratif 30, le film décoratif 30 comportant une face 40 munie de zones translucides 60 et de zones opaques 70. Le corps principal 20 est surmoulé sur le film décoratif 30 au moyen d'une matière plastique. La face 40 est lisse, c'est-à-dire qu'au niveau de la face 40, les zones translucides 60 affleurent avec les zones opaques 70.

Le corps principal 20 comprend, en regard des zones translucides 60, une partie en saillie 75 par rapport aux parties du corps principal qui sont en regard des zones opaques. Plus précisément, au niveau de la partie en saillie 75 le corps principal 20 présente une plus grande épaisseur. Par ailleurs, l'épaisseur du film décoratif 30 est réduite au niveau des zones translucides 60, l'épaisseur du film décoratif étant plus importante au niveau des zones opaques. Ceci permet de faire en sorte que la face 40 reste sensiblement plane et lisse, et ne présente pas de surépaisseur.

Le film décoratif 30 comprend, selon un exemple, un film translucide 32 sur lequel reposent des éléments opaques 34. le film décoratif 30 peut également comprendre une couche de couleur 36. Le film décoratif 30 a par un exemple une épaisseur comprise entre 5 et 20 micromètres, le différenciant notamment d'un revêtement. De façon avantageuse, le film décoratif 30 est thermoformé.

La face 40 munie de zones translucides 60 et de zones opaques 70 est destinée à être visible depuis l'extérieur du véhicule. De façon avantageuse, le film décoratif 30 recouvre la totalité de la surface extérieure de la pièce de carrosserie 10.

Le corps principal 20 est réalisé en une matière plastique choisie parmi au moins l'une des matières suivantes : polypropylène translucide, polyuréthane thermoplastique TPU, polyméthacrylate de méthyle, polyamide, polycarbonate, polyuréthane, cyclo-oléfines copolymères et cyclo-oléfines-polymères.

Le film décoratif 30 est réalisé en utilisant au moins l'une des matières suivantes : de l'Acrylonitrile Butadiène Styrène translucide ABS, du polypropylène PP, du Polycarbonate PC, du polyamide PA, du Polyméthacrylate de Méthyle PMMA, du polyuréthane PU, et du polyéthylène téréphtalate PET.

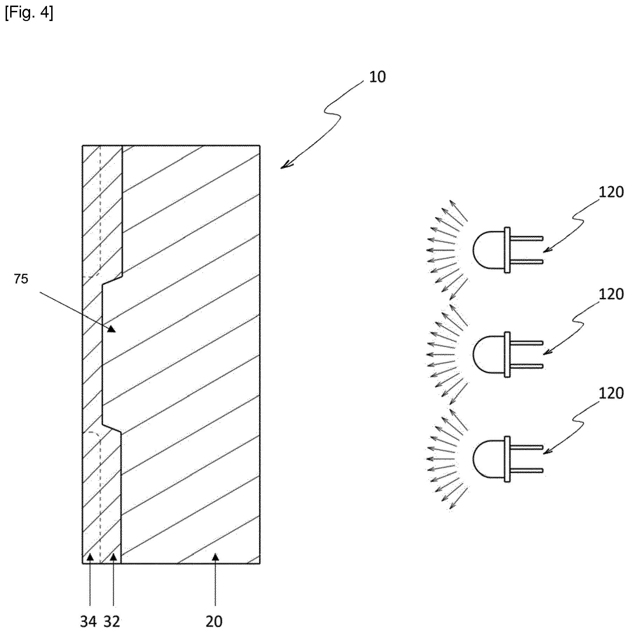

Comme illustré sur la figure 4, la pièce de carrosserie 10 peut comporter au moins une source lumineuse 120 sur la face opposée 50 à la face 40 munie des zones translucides 60 et des zones opaques. La source lumineuse 120 peut être une source ayant une longueur d'onde modulée.

### Liste des références

10 : pièce de carrosserie de véhicule automobile
20 : corps principal de la pièce de carrosserie 10
30 : film décoratif de la pièce de carrosserie 10
32 : film translucide du film décoratif 30
34 : éléments opaques du film décoratif 30
36 : couche de couleur du film décoratif 30
40 : face du film décoratif 30 visible depuis l'extérieur du véhicule
50 : face du film décoratif 30 opposée à la face 40
60 : zones translucides de la face 40 du film décoratif 30
70 : zones opaques de la face 40 du film décoratif 30
75 : zone en saillie du corps principal 20
80 : moule
82 : matrice du moule 80
84 : poinçon du moule 80
86 : orifices d'injection du moule 80
88 : évent positionné dans la paroi 100 du moule 80 (non représenté)
90 : chambre de moulage du moule 80
100 : paroi de la chambre de moulage 90 du moule 80
110 : espace entre les zones translucides 60 et la paroi 100 lorsque le film décoratif 30 est déposé dans le moule 80
120 : source lumineuse placée derrière la pièce 10, et en regard de la face 50

## Revendications

1. Procédé de fabrication d'une pièce de carrosserie (10) de véhicule automobile, comportant un corps principal (20) muni d'un film décoratif (30), le film décoratif (30) comportant une face (40) munie de zones translucides (60) et de zones opaques (70), **caractérisé en ce que** le procédé comporte les étapes suivantes :
- dépôt du film décoratif (30) sur une paroi (100) d'une chambre de moulage (90) d'un moule (80), les zones opaques (70) étant en relief par rapport aux zones translucides (60), et les zones opaques (70) étant en contact avec la paroi (100) du moule (80), ménageant un espace (110) entre les zones translucides (60) et la paroi (100) ;
- fermeture du moule (80) ;
- injection d'une matière plastique dans la chambre de moulage (90) afin de surmouler le corps principal (20) sur le film décoratif (30), la pression d'injection permettant de pousser les zones translucides (60) contre la paroi (100).

2. Procédé selon l'une des revendications précédentes, dans lequel on utilise un film décoratif (30) comprenant un film translucide (32) sur lequel reposent des éléments opaques (34).

3. Procédé selon l'une des revendications précédentes, dans lequel on utilise un film décoratif (30) comprenant une couche de couleur (36), par exemple sur la face opposée (50) à la face (40) munie des zones translucides (60) et des zones opaques.

4. Procédé selon l'une des revendications précédentes, dans lequel la pression d'injection est apte à rendre lisse la surface de la pièce de carrosserie en contact avec la paroi du moule.

5. Procédé selon l'une des revendications précédentes, dans lequel on évacue l'air de l'espace (110) entre les zones translucides (60) et la paroi (100) lors de l'injection, au moyen d'au moins un évent (88) positionné dans la paroi (100) du moule.

6. Procédé selon l'une des revendications précédentes, dans lequel on utilise un film décoratif (30) dont l'épaisseur est comprise entre 5 et 20 micromètres.

7. Procédé selon l'une des revendications précédentes, dans lequel on utilise un film décoratif (30) thermoformé.

8. Procédé selon l'une des revendications précédentes, dans lequel la face (40) munie de zones translucides (60) et de zones opaques (70) est destinée à être visible depuis l'extérieur du véhicule.

9. Procédé selon l'une des revendications précédentes, dans lequel on recouvre toute la paroi (100) du moule (80) avec le film décoratif (30), afin que le film décoratif (30) recouvre la totalité de la surface extérieure de la pièce de carrosserie.

10. Procédé selon l'une des revendications précédentes, dans lequel on injecte la matière plastique choisie parmi au moins l'une des matières suivantes : polypropylène translucide, polyuréthane thermoplastique (TPU), polyméthacrylate de méthyle, polyamide, polycarbonate, polyuréthane, cyclo-oléfines copolymères et cyclo-oléfines-polymères.

11. Procédé selon l'une des revendications précédentes, dans lequel on utilise un film décoratif (30) réalisé en utilisant au moins l'une des matières suivantes : de l'Acrylonitrile Butadiène Styrène translucide (ABS), du polypropylène (PP), du Polycarbonate (PC), du polyamide (PA), du Polyméthacrylate de Méthyle (PMMA), du polyuréthane (PU), et du polyéthylène téréphtalate (PET).

12. Procédé selon l'une des revendications précédentes, dans lequel on injecte du polycarbonate à 450 bars et à 250°C, et on utilise un film décoratif (30) réalisé en polycarbonate.

13. Procédé selon l'une des revendications 1 à 11, dans lequel on injecte du polyuréthane thermoplastique (TPU) à 60 bars et à 90°C, et on utilise un film décoratif (30) réalisé en polypropylène.

14. Procédé selon l'une des revendications précédentes, dans lequel on positionne au moins une source lumineuse (120) sur la face opposée (50) à la face (40) munie des zones translucides (60) et des zones opaques.

15. Procédé selon la revendication précédente, dans lequel la source lumineuse (120) est une source ayant une longueur d'onde modulée.

16. Pièce de carrosserie (10) de véhicule automobile, comportant un corps principal (20) muni d'un film décoratif (30), le film décoratif (30) comportant une face (40) munie de zones translucides (60) et de zones opaques (70), **caractérisé en ce que** le corps principal (20) est surmoulé sur le film décoratif (30) au moyen d'une matière plastique, et **en ce qu'**au niveau de la face (40), les zones translucides (60) affleurent avec les zones opaques (70).

17. Pièce de carrosserie (10) selon la revendication 16, dans lequel le corps principal (20) comprend, regard des zones translucides (60), une partie en saillie (75) par rapport aux parties du corps principal qui sont en regard des zones opaques.

18. Pièce de carrosserie (10) selon la revendication 16 ou 17, dans laquelle le film décoratif (30) comprend un film translucide (32) sur lequel reposent des éléments opaques (34).

19. Pièce de carrosserie (10) selon l'une des revendications 16 à 18, dans laquelle le film décoratif (30) comprend une couche de couleur (36).

20. Pièce de carrosserie (10) selon l'une des revendications 16 à 19, dans laquelle le film décoratif (30) a une épaisseur comprise entre 5 et 20 micromètres.

21. Pièce de carrosserie (10) selon l'une des revendications 16 à 20, dans laquelle le film décoratif (30) est thermoformé.

22. Pièce de carrosserie (10) selon l'une des revendications 16 à 21, dans laquelle la face (40) munie de zones translucides (60) et de zones opaques (70) est destinée à être visible depuis l'extérieur d'un véhicule.

23. Pièce de carrosserie (10) selon l'une des revendications 16 à 22, dans laquelle le film décoratif (30) recouvre la totalité de la surface extérieure de la pièce de carrosserie (10).

24. Pièce de carrosserie (10) selon l'une des revendications 16 à 23, dans laquelle le corps principal (20) est réalisé en une matière plastique choisie parmi au moins l'une des matières suivantes : polypropylène translucide, polyuréthane thermoplastique (TPU), polyméthacrylate de méthyle, polyamide, polycarbonate, polyuréthane, cyclo-oléfines copolymères et cyclo-oléfines-polymères.

25. Pièce de carrosserie (10) selon l'une des revendications 16 à 24, dans laquelle le film décoratif (30) est réalisé en utilisant au moins l'une des matières suivantes : de l'Acrylonitrile Butadiène Styrène translucide (ABS), du polypropylène (PP), du Polycarbonate (PC), du polyamide (PA), du Polyméthacrylate de Méthyle (PMMA), du polyuréthane (PU), et du polyéthylène téréphtalate (PET).

26. Pièce de carrosserie (10) selon l'une des revendications 16 à 25, comportant au moins une source lumineuse (120) sur la face opposée (50) à la face (40) munie des zones translucides (60) et des zones opaques.

27. Pièce de carrosserie (10) selon la revendication précédente, dans laquelle la source lumineuse (120) est une source ayant une longueur d'onde modulée.
